(19) **Europäisches Patentamt / European Patent Office / Office européen des brevets**

(11) **EP 2 692 715 B1**

(12) **EUROPEAN PATENT SPECIFICATION**

(45) Date of publication and mention
of the grant of the patent:
**21.02.2018 Bulletin 2018/08**

(21) Application number: **12763900.3**

(22) Date of filing: **22.03.2012**

(51) Int Cl.:
*C06D 5/00* (2006.01)   *B60R 21/264* (2006.01)
*C06B 25/00* (2006.01)   *C06B 31/00* (2006.01)
*C06B 43/00* (2006.01)

(86) International application number:
**PCT/JP2012/057258**

(87) International publication number:
**WO 2012/133072 (04.10.2012 Gazette 2012/40)**

(54) **GAS-FORMING AGENT COMPOSITION**

ZUSAMMENSETZUNG AUS GASBILDENDEN MITTELN

COMPOSITION D'AGENT GAZOGÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2011 JP 2011077107**

(43) Date of publication of application:
**05.02.2014 Bulletin 2014/06**

(73) Proprietor: **Daicel Corporation
Osaka-shi, Osaka 530-0011 (JP)**

(72) Inventors:
• **KOBAYASHI, Syouji
Tatsuno-shi
Hyogo 671-1681 (JP)**

• **WU, Jianzhou
Danyang City
Jangsu 212312 (CN)**

(74) Representative: **Grünecker Patent- und
Rechtsanwälte
PartG mbB
Leopoldstraße 4
80802 München (DE)**

(56) References cited:
EP-A1- 1 254 880       EP-A1- 2 444 383
WO-A1-03/011798        JP-A- 2004 231 446
JP-A- 2010 269 969     JP-B2- 3 907 548
US-A1- 2005 189 052    US-A1- 2005 263 224
US-A1- 2008 149 233

**Description**

Technical Field

The present invention relates to a gas generating composition that has a low combustion temperature, good ignition ability and a high heat resistance.

Background Art

When a gas generating agent is used in an inflator for use in a safety apparatus for a vehicle such as a airbag apparatus disposed in a vehicle, it is very important to improve ignition ability of the gas generating agent in order to ensure product reliability.

And, it is important to decrease the combustion temperature of the gas generating agent because the heat load on the coolant disposed in the inflator can be reduced and an amount of the coolant can be decreased.

However, where the combustion temperature of the gas generating agent is decreased too much, the ignition ability is degraded. Therefore, it is desirable to decrease the combustion temperature and obtain excellent ignition ability at the same time.

Further, depending on the season or region, a vehicle can be exposed for a long time to high-temperature environment, and therefore it is also required that a gas generating agent in an inflator have high heat resistance.

JP-B No. 3907548 discloses a gas generating composition for an inflator including: (a) melamine cyanurate or a mixture of melamine cyanurate and a nitrogen-containing organic compound as a fuel, and (b) an oxygen-containing oxidizing agent, which can exhibit a specific effect such as a low combustion temperature and a small amount of generated hazardous gas, as a result of using novel melamine cyanurate as a fuel component.

It is described (in the paragraph [0015]) that the compounding ratio (mass ratio), nitrogen-containing organic compound/melamine cyanurate in the mixture of melamine cyanurate and nitrogen-containing organic compound is preferably 0.05 to 8, more preferably 0.1 to 6, and even more preferably 0.2 to 2. In this case, when the ratio of the nitrogen-containing organic compound/melamine cyanurate is 0.2 to 2, the content of melamine cyanurate is 33.3 to 83.3 % by mass and the content of nitroguanidine is 16.7 to 66.7 % by mass.

Decreasing combustion temperature is described as a problem to be solved (in the paragraph [0007]), but improving ignition ability is not a problem to be solved, and it is only described that the ignition ability is improved by selecting an appropriate binder (in the paragraph [0024]).

US-A-2008/149233 discloses a gas generating composition which comprises a fuel, an oxidizing agent and basic magnesium carbonate. The fuel may be at least one selected from melamine, melamine cyanurate, guanidine nitrate and nitroguanidine. The oxidizing agent may be basic copper nitrate. The gas generating composition may further contain a binder.

US-A-2005/263224 discloses a gas generating composition which comprises a mixture of melamine cyanurate and a nitrogen-containing organic compound as a fuel, an oxidizing agent, a binder and an additive. The nitrogen-containing organic compound may be nitroguanidine. The oxidizing agent may be a basic metal nitrate such as basic copper nitrate, basic cobalt nitrate, basic zinc nitrate or basic manganese nitrate.

EP-A-2444383 discloses a gas generating composition which comprises a fuel and an oxidizing agent, said oxidizing agent being basic copper carbonate or a mixture of basic copper carbonate and basic copper nitrate. The fuel may be a mixture of guanidine nitrate and nitroguanidine. The gas generating composition may further contain an additive such as basic zinc carbonate.

EP-A-1254880 discloses a gas generating composition which comprises melamine or trihydrazinotriazine as a fuel.

US-A-2005/189052 discloses a gas generating composition which comprises a fuel. The fuel consists of a guanidine compound and a further fuel component.

SUMMARY OF THE INVENTION

The present invention provides a gas generating composition containing: (a) a fuel; (b) an oxidizing agent containing a basic metal nitrate; (c) a basic metal carbonate; and (d) a binder,
the fuel of the component (a) containing melamine cyanurate (MC) and nitroguanidine (NQ), with a ratio (MC/NQ) of contents of MC and NQ being within a range of 0.3 to 1.5;
the basic metal carbonate of the component (c) being basic zinc carbonate, basic copper carbonate or a combination thereof; and
the binder of the component (d) being one or two or more selected from:

(d-1) starch, etherified starch, methyl cellulose, hydroxyethyl methyl cellulose, hydroxypropyl methyl cellulose, and hydroxyethyl cellulose;
(d-2) poly(vinyl alcohol), polyvinyl ether, polyethylene oxide, polyvinyl pyrrolidone, and polyacrylamide; and
(d-3) guar gum, etherified guar gum, and tamarind gum.

Preferred embodiments of the present invention are set forth in the dependent claims.

DETAILED DESCRIPTION OF THE INVENTION

The present invention is to provide a gas generating composition with a high heat resistance and also a low combustion temperature and good ignition ability. Thus, the gas generating composition in accordance with the present invention has a high heat resistance and also a low combustion temperature and good ignition ability.

<(a) Fuel>

The fuel of the component (a) used in accordance with the present invention includes melamine cyanurate and nitroguanidine, and may include only melamine cyanurate and nitroguanidine or these two components and additionally also a known other fuel within a range in which the present invention can be obtained.
An example of a known other fuel includes one, two, or more selected from tetrazole compounds such as 5-aminotetrazole and bitetrazole ammonium salt, guanidine compounds such as guanidine nitrate and dicyandiamide (nitroguanidine is excluded), and triazine compounds such as melamine, trimethylol melamine, alkylated methylol melamine, ammeline, ammeland, melamine nitrate, melamine perchlorate, trihydrazinotriazine, and a nitrocompound of melamine.
When a known other fuel is included in addition to the melamine cyanurate and nitroguanidine, a ratio of the other fuel in the fuel of the component (a) is equal to or less than 5 % by mass.

<(b) Oxidizing Agent>

The oxidizing agent of the component (b) used in accordance with the present invention includes a basic metal nitrate and, as necessary, another oxidizing agent. By using the basic metal nitrate as the component (b), it is possible to decrease combustion temperature.
The basic metal nitrate can be one or two or more selected from basic copper nitrate, basic cobalt nitrate, basic zinc nitrate, and basic manganese nitrate. Among them, basic copper nitrate is preferred.
A example of other oxidizing agent includes metal nitrates, ammonium nitrate, metal perchlorates, ammonium perchlorate, metal nitrites, and metal chlorates.

<(c) Basic Metal Carbonate>

The basic metal carbonate of the component (c) used in accordance with the present invention is basic zinc carbonate, basic copper carbonate, or a combination thereof. By using the component (c), it is possible to reduce combustion temperature.

<(d) Binder>

The binder of the component (d) that is used in accordance with the present invention is one or two or more selected from:

(d-1) starch, etherified starch, methyl cellulose, hydroxyethyl methyl cellulose, hydroxypropyl methyl cellulose, and hydroxyethyl cellulose;
(d-2) poly(vinyl alcohol), polyvinyl ether, polyethylene oxide, polyvinyl pyrrolidone, and polyacrylamide;
(d-3) guar gum, etherified guar gum, and tamarind gum.

The binder of the component (d) can be a combination of a binder selected from (d-1), (d-2), and (d-3) and another known binder. A combination of a binder selected from (d-2) and a sodium salt of carboxymethyl cellulose is preferred.
The binder of the component (d) can be a combination of a binder selected from (d-1) and a binder selected from (d-2) .
A combination of a binder selected from methyl cellulose, hydroxyethyl methyl cellulose, hydroxypropyl methyl cellulose, and hydroxyethyl cellulose of (d-1) and polyvinyl pyrrolidone of (d-2) is preferred.

<Other Components>

The gas generating composition in accordance with the present invention may also include various known additives in order to adjust the burning rate of the gas generating composition and purify combustion gas, within the range in which the present invention is obtained.

A example of a known additive includes metal oxides such as cupric oxide, iron oxide, zinc oxide, cobalt oxide, manganese oxide, molybdenum oxide, nickel oxide, bismuth oxide, silica, and alumina; metal hydroxides such as aluminum hydroxide, magnesium hydroxide, cobalt hydroxide, and iron hydroxide; cobalt carbonate, calcium carbonate; composite compounds of metal oxides or hydroxides such as Japanese acid clay, kaolin, talc, bentonite, diatomaceous earth, and hydrotalcite; metal salts such as sodium silicate, mica molybdate, cobalt molybdate, and ammonium molybdate; molybdenum disulfide, calcium stearate, silicon nitride, silicon carbide, metaboric acid, boric acid, and anhydrous boric acid.

In the gas generating composition in accordance with the present invention, the ratio (MC/NQ) of the contents of the melamine cyanurate (MC) and nitroguanidine (NQ) in the fuel of the component (a) is 0.30 to 1.50 and more preferably 0.5 to 1.30.

The contents of the components (a) to (d) in the gas generating composition in accordance with the present invention are described below:

The content of the fuel of the component (a) is 15 to 40 % by mass, preferably 20 to 40 % by mass;
The content of the basic metal nitrate of the component (b) is 40 to 83 % by mass, preferably 40 to 75 % by mass;
The content of the basic metal carbonate of the component (c) is 1 to 15 % by mass, preferably 2 to 10 % by mass; and
The content of the binder of the component (d) is 1 to 15 % by mass, preferably 3 to 10 % by mass.

Since the binder of the component (d) burns and generates gas by itself, it can also function as a fuel. Therefore, it is desirable that the content of the binder be adjusted with consideration for oxygen balance of the entire gas generating composition.

The oxygen balance is the mass (represented by +) of oxygen generated when 1 g of the gas generating composition is completely burned, or the mass (represented by -) of oxygen required for the complete burning, and can be determined from a sum of multiplication-products of the oxygen balance and content (% by mass) of the components of the gas generating composition (see, for example, JP-A No. 2005-119926, in the paragraph [0038]).

The oxygen balance of the gas generating composition in accordance with the present invention is preferably +0.02 g/g to -0.02 g/g.

In the gas generating composition in accordance with the present invention, the pressure index (n) can be made equal to or less than 0.2, preferably equal to or less than 0.15, and more preferably equal to or less than 0.10.

the equation of pressure index (n): $r = aP^n$ where r is a burning rate, a is a constant (a value inherent to the gas generating composition), P is a pressure inside the inflator, and n is a pressure index (a value inherent to the gas generating composition).

The gas generating composition in accordance with the present invention can be molded into a desired shape, and a single perforated cylindrical molded article, a perforated cylindrical molded article, or a pellet-shaped molded article can be obtained. These molded articles can be manufactured by a method in which water or an organic solvent is added to and mixed with the gas generating composition and the obtained mixture is extrusion-molded (into the single-perforated cylindrical molded article or a perforated cylindrical molded article), or by a compression-molding method using a pelletizer or the like (for the pellet-shaped molded article).

The gas generating composition in accordance with the present invention or a molded article obtained therefrom can be used for, for example, an airbag inflator of a driver's side, an airbag inflator of a passenger side next to the driver, a side airbag inflator, an inflator for an inflatable curtain, an inflator for a knee bolster, an inflator for an inflatable seat belt, an inflator for a tubular system, and an inflator for a pretensioner, of various vehicles.

An inflator, that uses the gas generating composition in accordance with the present invention or a molded article obtained therefrom, may be of a pyrotechnic type in which a gas supply source is only a gas generating agent or of a hybrid type that uses both compressed gas, such as argon, and a gas generating agent.

Furthermore, the gas generating composition of the present invention or a molded article obtained therefrom can be also used as an igniting agent called an enhancer (or a booster), which serves to transmit the energy of a detonator or a squib to the gas generating agent.

EXAMPLES

The present invention is explained hereinbelow by Examples.

Examples and Comparative Examples

Gas generating compositions including components shown in Table 1 were manufactured. The properties shown in Table 1 were measured for those compositions. The results are shown in Table 1.

(1) Combustion temperature

Combustion temperature based on theoretical calculations.

(2) Burning rate

<Method for Preparing Cylindrical Strand>

Water was added to and mixed with the compositions of Examples and Comparative Examples, and the mixtures were extrusion-molded, cut, and dried to obtain single-perforated molded articles.
The obtained single-perforated molded article was pulverized in an agate mortar, and a powder, that has passed through a wire mesh with a mesh size of 500 $\mu$m, was loaded to a receiving die of a predetermined die.
A cylindrical strand with an outer diameter of 9.55 mm and a length of 12.70 mm was then molded by compressing for 5 sec under a gage pressure of 14.7 MPa applied by a hydraulic pump from the pestle-side end surface and then removing from the die.
An epoxy resin chemical-reaction-type adhesive "Bond Quick 30" manufactured by Konishi Co., Ltd. was applied to the side surface of the cylindrical strand and then thermally cured for 16 hours at 110 °C, so as to obtain a sample which could be ignited and burned only from the end surface and could not be ignited from the side surface (unifacial propagating combustion).

<Method for Measuring Combustion Rate>

The cylindrical strand serving as a sample was installed in an SUS sealed bomb with an internal volume of 1 liter and pressurized to and stabilized at 6860 kPa, while the inside of the bomb was purged with nitrogen.
Then, a predetermined electric current was passed through a nichrome wire that was brought into contact with the end surface of the strand and the strand was ignited and burned by the fusion energy of the nichrome wire.
The behavior of pressure inside the bomb with time was verified by a recorder chart, a period of time from the start of the combustion until the peak of pressure rise was verified from the scale of the chart, and the numerical value that was obtained by dividing the length of the strand prior to combustion by the above period of time was taken as the burning rate.
The tests with pressurization and stabilization of 4900 kPa and 8820 kPa were performed in the same manner as described above.

(3) Pressure index

The burning rate was measured under a nitrogen atmosphere and a pressure of 4900 kPa, 6860 kPa, and 8820 kPa by using the cylindrical strands manufactured by the above-described method.
In the Examples, a burning rate under 6860 kPa and a pressure index within a range of 4900 kPa to 8820 kPa are shown.

(4) Ignition ability

The single-perforated molded article (with an outer diameter of about 4 mm, an inner diameter of about 1 mm, a length of about 4 mm) obtained by extrusion-molding was loaded into a combustion chamber of a gas generator (provided inside thereof with the combustion chamber with a volume of 31 cm$^3$; the total surface area of a plurality of gas discharge openings provided in the outer housing is 79.8 mm$^2$) for the evaluation test. The amount of the molded article was such that no unnecessary gap appeared in the combustion chamber and also such that the single-perforated molded article located inside the combustion chamber was not cracked when the gas generator was sealed. The amount of the single-perforated molded article used for the measurements is shown in Table 1.
The gas generator for the evaluation test had ignition device provided with an igniter including 55 mg of ZPP, and 4.5 g of a transfer charge including nitroguanidine, strontium nitrate, carboxymethyl cellulose strontium salt, and Japanese acid clay.
The gas generator for the evaluation test was disposed in a 60-liter tank (-40 °C) equipped with a sensor for pressure measurements. The combustion test was conducted by actuating the gas generator.

The actuation start time of the ignition device was taken as 0, and the ignition ability was evaluated by the time that had elapsed since the actuation start time and the value of pressure inside the 60-liter tank at the elapsed time.

Where the pressure at 10 milliseconds was equal to or greater than 30 kPa, the ignition ability was determined to be very good (◎). Where the pressure at 10 milliseconds was less than 50 kPa, the ignition ability was determined to be poor.

(5) Rupturing time

The components of the compositions shown in Table 1 were mixed at the contents shown in Table 1, and then an amount of 30 g of each mixture was weighed. A total of 6 g of water was added thereto, and mixing was conducted for no less than 5 minutes in an antistatic vinyl bag. The lumps obtained were broken into small pieces, dried for 2 hours at 110 °C, and then pulverized in a mortar to obtain powders.

A total of 1 g of the powder was placed into a die, a gage pressure of 14.7 MPa was applied with a hydraulic pump, the pressure was held for 5 seconds and then a cylindrical strand with a diameter of 9.55 mm was obtained.

A total of 20 strands (each 1 g) were prepared, introduced in a pressure vessel provided with a rupturing plate (made from aluminum) and heated for a maximum of 400 hours at 110 °C. Where the decomposition gas was generated and the pressure inside the pressure vessel reached a predetermined level, the rupturing plate ruptures and the test was ended. The longer is the rupturing time, the higher is the heat resistance.

A total of 20 strands (each 1 g) manufactured in the same manner as in the above-described <Method for Preparing Cylindrical Strands> were prepared with the compositions shown in Table 2, and the heat resistance was evaluated in the same manner as for the compositions shown in Table 1.

Examples and Comparative Examples

Gas generating compositions including the components shown in Tables 1 and 2 were manufactured. The properties shown in Table 1 and 2 were measured with respect to those compositions. The results are shown in Tables 1 and 2.

Table 1

|  | | Composition (composition ratio :% by mass) | MC/NQ | Binder | Rupturing time (hour) |
|---|---|---|---|---|---|
| | Example 1 | MC/NQ/BCN/BCC/CST (14.23/12/63.77/5/5) | 1.19 | CST | >400 |
| | Example 2 | MC/NQ/BCN/BCC/HPS (14.23/12/63.77/5/5) | 1.19 | HPS | >400 |
| | Example 3 | MC/NQ/BCN/BCC/HEC (14.23/12/63.77/5/5) | 1.19 | HEC | >400 |
| | Example 4 | MC/NQ/BCN/BCC/PVA (14.23/12/63.77/5/5) | 1.19 | PVA | >400 |
| | Example 5 | MC/NQ/BCN/BCC/PVP (14.23/12/63.77/5/5) | 1.19 | PVP | >400 |
| | Example 6 | MC/NQ/BCN/BCC/PAA (14.23/12/63.77/5/5) | 1.19 | PAA | 376 |
| | Example 7 | MC/NQ/BCN/BCC/Gum (14.23/12/63.77/5/5) | 1.19 | Gum | >400 |
| | Example 8 | MC/NQ/BCN/BCC/PAA/CMC-Na (14.23/12/63.77/5/2.5/2.5) | 1.19 | PAA/ CMCNa | 359 |
| | Comparative Example 1 | MC/NQ/BCN/BCC/CMC-Na (14.23/12/63.77/5/5) | 1.19 | CMCNa | 304 |
| | Comparative Example2 | MC/NQ/BCN/BCC/AGA (14.23/12/63.77/5/5) | 1.19 | AGA | 136 |
| | Comparative Example3 | MC/NQ/BCN/BCC/PAANa (14.23/12/63.77/5/5) | 1.19 | PAANa | 94 |

Table 2

| | Composition (Composition ratio:% by mass) | MC/NQ | Binder type | Burning temperature (K) | Burning rate (mm/s) | Pressure Index | Ignition ability | | Rupturing time (hour) |
| | | | | | | | Low temp. -40°C | Amount used (g) | |
|---|---|---|---|---|---|---|---|---|---|
| Example 9 | MC/NQ/BCN/BCC/HEC (13.17/11/65.83/5/5) | 1.20 | HEC | 1536 | 16.1 | 0.16 | ○ | 33.5 | >400 |
| Example 10 | MC/NQ/BCN/BCC/PVP/HEC (12.13/11.5/66.37/5/2.5/2.5) | 1.05 | PVP/HEC | 1545 | 17.9 | 0.06 | ○ | 34.9 | >400 |
| Example 11 | MC/NQ/BCN/BCC/PVP (10.03/14/65.97/5/5) | 0.72 | PVP | 1569 | 19.9 | 0.07 | ○ | 34.6 | >400 |
| Example 12 | MC/NQ/BCN/BCC/PAA (8.87/16.5/64.63/5/5) | 0.54 | PAA | 1542 | 23.1 | 0.01 | ○ | 33.8 | 380 |

Component (a)

    MC: melamine cyanurate
    NQ: nitroguanidine

Component (b)

    BCN: basic copper nitrate

Component (c)

    BCC: basic copper carbonate

Component (d)

    CST: starch (corn starch)
    HPS: etherified starch (hydroxypropyl starch)
    HEC: hydroxyethyl cellulose
    PVA: poly(vinyl alcohol)
    PAA: polyacrylamide
    Gum: guar gum
    CMCNa: carboxymethyl cellulose sodium salt

**Claims**

1.  A gas generating composition comprising: (a) a fuel; (b) an oxidizing agent comprising a basic metal nitrate; (c) a basic metal carbonate; and (d) a binder,
    the fuel of the component (a) comprising melamine cyanurate (MC) and nitroguanidine (NQ), with a ratio (MC/NQ) of contents of MC and NQ being within a range of 0.3 to 1.5;
    the basic metal carbonate of the component (c) being basic zinc carbonate, basic copper carbonate or a combination thereof; and
    the binder of the component (d) being one or two or more selected from the group consisting of:

        (d-1) starch, etherified starch, methyl cellulose, hydroxyethyl methyl cellulose, hydroxypropyl methyl cellulose, and hydroxyethyl cellulose;
        (d-2) poly(vinyl alcohol), polyvinyl ether, polyethylene oxide, polyvinyl pyrrolidone, and polyacrylamide; and
        (d-3) guar gum, etherified guar gum, and tamarind gum,

    wherein
    the content of the fuel (a) is 15 to 40 % by mass,
    the content of the oxidizing agent comprising a basic metal nitrate is 40 to 83 % by mass,
    the content of the basic metal carbonate (c) is 1 to 15 % by mass, and
    the content of the binder (d) is 1 to 15 % by mass.

2.  The gas generating composition according to claim 1, wherein the binder of the component (d) is a combination of a binder selected from the group consisting of (d-2) with carboxymethyl cellulose sodium salt.

3.  The gas generating composition according to claim 1, wherein the binder of the component (d) is a combination of a binder selected from the group consisting of (d-1) with a binder selected from the group consisting of (d-2).

4.  The gas generating composition according to any one of claims 1 to 3, wherein
    a pressure index (n) represented by the following equation below is equal to or less than 0.2:

$$\text{the equation} : r = aP^n$$

where r is a burning rate, a is a constant (a value inherent to the gas generating composition), P is a pressure inside an inflator, and n is a pressure index (a value inherent to the gas generating composition).

## Patentansprüche

1. Gas erzeugende Zusammensetzung umfassend: (a) einen Treibstoff; (b) ein Oxidationsmittel umfassend ein basisches Metallnitrat; (c) ein basisches Metallcarbonat; und (d) ein Bindemittel,
   wobei der Treibstoff der Komponente (a) Melamincyanurat (MC) und Nitroguanidin (NQ) in einem Verhältnis (MC/NQ) der Gehalte an MC und NQ innerhalb eines Bereichs von 0,3 bis 1,5 umfasst;
   das basische Metallcarbonat der Komponente (c) basisches Zinkcarbonat, basisches Kupfercarbonat oder eine Kombination davon ist; und
   das Bindemittel der Komponente (d) ein oder zwei oder mehr ist, gewählt aus der Gruppe bestehend aus:

   (d-1) Stärke, veretherte Stärke, Methylcellulose, Hydroxyethylmethylcellulose, Hydroxypropylmethylcellulose und Hydroxyethylcellulose;
   (d-2) Poly(vinylalkohol), Polyvinylether, Polyethylenoxid, Polyvinylpyrrolidon und Polyacrylamid; und
   (d-3) Guargummi, veretherter Guargummi und Tamarindengummi,

   worin
   der Gehalt an Treibstoff (a) 15 bis 40 Masse-% beträgt,
   der Gehalt an Oxidationsmittel, umfassend ein basisches Metallnitrat, 40 bis 83 Masse-% beträgt,
   der Gehalt an basischem Metallcarbonat (c) 1 bis 15 Masse-% beträgt, und
   der Gehalt an Bindemittel (d) 1 bis 15 Masse-% beträgt.

2. Gas erzeugende Zusammensetzung nach Anspruch 1, worin das Bindemittel der Komponente (d) eine Kombination eines Bindemittels, gewählt aus der Gruppe bestehend aus (d-2), mit dem Natriumsalz von Carboxymethylcellulose ist.

3. Gas erzeugende Zusammensetzung nach Anspruch 1, worin das Bindemittel der Komponente (d) eine Kombination eines Bindemittels, gewählt aus der Gruppe bestehend aus (d-1), mit einem Bindemittel gewählt aus der Gruppe, bestehend aus (d-2), ist.

4. Gas erzeugende Zusammensetzung nach einem der Ansprüche 1 bis 3, worin ein Druckindex (n), dargestellt durch die folgende Gleichung, 0,2 oder weniger ist:

$$\text{die Gleichung:} \qquad r = aP^n$$

worin r eine Verbrennungsrate, a eine Konstante (ein der Gas erzeugenden Zusammensetzung inhärenter Wert), P ein Druck im Inneren eines Gasgenerators und n ein Druckindex (ein der Gas erzeugenden Zusammensetzung inhärenter Wert) ist.

## Revendications

1. Composition gazogène comprenant : (a) un combustible ; (b) un comburant comprenant un nitrate de métal basique ; (c) un carbonate de métal basique ; et (d) un liant,
   le combustible du constituant (a) comprenant du cyanurate de mélamine (MC) et de la nitroguanidine (NQ), avec un rapport (MC/NQ) des teneurs en MC et NQ se situant dans une plage de 0,3 à 1,5 ;
   le carbonate de métal basique du constituant (c) étant du carbonate de zinc basique, du carbonate de cuivre basique ou une combinaison de ceux-ci ; et
   le liant du constituant (d) étant un ou deux ou plus de deux liants choisis dans le groupe constitué de :

   (d-1) amidon, amidon estérifié, méthylcellulose, hydroxyéthylméthylcellulose, hydroxypropylméthylcellulose et hydroxyéthylcellulose ;
   (d-2) poly(alcool de vinyle), poly(éther de vinyle), oxyde de polyéthylène, polyvinylpyrrolidone et polyacrylamide ;

et
(d-3) gomme de guar, gomme de guar éthérifiée et gomme de tamarin,
où

la teneur en combustible (a) va de 15 à 40 % en masse,
la teneur en comburant comprenant un nitrate de métal basique va de 40 à 83 % en masse,
la teneur en carbonate de métal basique (c) va de 1 à 15 % en masse et
la teneur en liant (d) va de 1 à 15 % en masse.

2.  Composition gazogène selon la revendication 1, dans laquelle le liant du constituant (d) est une combinaison d'un liant choisi dans le groupe constitué de (d-2) avec un sel sodique de carboxyméthylcellulose.

3.  Composition gazogène selon la revendication 1, dans laquelle le liant du constituant (d) est une combinaison d'un liant choisi dans le groupe constitué de (d-1) avec un liant choisi dans le groupe constitué de (d-2).

4.  Composition gazogène selon l'une quelconque des revendications 1 à 3, dans laquelle
un indice de pression (n) représenté par l'équation suivante ci-dessous est inférieur ou égal à 0,2 :

$$\text{équation} : r = aP^n$$

dans laquelle r est une vitesse de combustion, a est une constante (une valeur inhérente à la composition gazogène), P est une pression à l'intérieur d'un gonfleur et n est un indice de pression (une valeur inhérente à la composition gazogène).

EP 2 692 715 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3907548 B
- US 2008149233 A
- US 2005263224 A
- EP 2444383 A
- EP 1254880 A
- US 2005189052 A
- JP 2005119926 A